# EUROPEAN PATENT APPLICATION

(11) **EP 3 868 579 A1**
(43) Date of publication of application: **25.08.2021**
(21) Application number: 19888936.2
(22) Date of filing: 22.11.2019
(51) Int. Cl.: B60C 19/00, G01N 21/95, G06T 1/00, G01M 17/02

(54) **TIRE SURFACE IMAGE DISPLAY METHOD, AND IMAGE PROCESSING DEVICE EMPLOYED FOR IMAGE DISPLAY THEREOF**

(30) Priority: 30.11.2018 JP 2018224546
(71) Applicant: KABUSHIKI KAISHA KOBE SEIKO SHO (KOBE STEEL, LTD.), Hyogo 651-8585 (JP)
(72) Inventor: FUKUDA, Jumpei, Hyogo 676-8670 (JP); MATSUSHITA, Yasuhiro, Hyogo 676-8670 (JP)
(74) Representative: TBK
(86) International application number: PCT/JP2019/045736
(87) International publication number: WO 2020/110926

(57) **Abstract**

A method for displaying an image of a surface of a tire includes: a step of taking an image of a surface (1a) of a tire (1) formed with a mark having a protrusion and a recess; a step of acquiring waveform data from the taken image of the surface; a step of creating a histogram from the waveform data; a step of determining, based on the histogram, a first bin threshold to separate a surface luminance of the protrusion of the mark from a surface luminance of the surface other than the protrusion, and a second bin threshold to separate a surface luminance of the recess of the mark from a surface luminance of the surface other than the recess; and a step of displaying the image of the surface of the tire including the mark on a screen (11a) by representing a region equal to or higher than the first bin threshold, a region lower than the first bin threshold and higher than the second bin threshold, and a region equal to or lower than the second bin threshold in the histogram in three attributes of color.

## Description

### Technical Field

The present invention relates to a method for displaying an image of a surface of a tire and an image processing device for displaying the image.

### Background Art

A shape inspection device has been known for inspecting a shape of a tire having a surface formed with a character, a figure, a symbol, a pattern, and/or other marks (hereinafter, generally referred to as "a mark having a protrusion and a recess" including a tread) representing, for example, a model and/or a size of a product, and a logo of a manufacturer (e.g., see Patent Literature 1).

For instance, Patent Literature 1 discloses a technology of obtaining corrected binary distribution information (an image) based on an image of a sidewall surface formed with a mark having a protrusion and a recess as described above during an inspection of a possible defect in a shape of the sidewall surface.

However, the technology disclosed in Patent Literature 1 mere permits an operator of an inspection device to confirm the image displayed on a screen of a display device, and hence needs further improvement in a visibility of the image to ensure a position where an obvious defect or malfunction occurs.

### Citation List

### Patent Literature

Patent Literature 1: Japanese Unexamined Patent Publication No. 2010-14698

### Summary of Invention

An object of the present invention is to provide a method for clearly displaying an image of a surface of a tire on a screen and an image processing device for displaying the image to increase a visibility of the image of the surface of the tire, the surface being formed with a mark having a protrusion and a recess (e.g., a character, a figure, a symbol, a pattern, and a tread representing, for example, a model and/or a size of a product, and a logo of a manufacturer).

A method for displaying an image of a surface of a tire according to one aspect of the present invention includes: an image taking step of taking an image of a surface of a tire formed with a mark having a protrusion and a recess; a waveform data acquisition step of acquiring, from the taken image of the surface, waveform data representing a relation between a specific position on the surface of the tire and a surface luminance at the specific position; a histogram creation step of creating, from the waveform data, a histogram representing a relation between bins for surface luminance each set at a predetermined interval and respective frequencies in the bins; a bin threshold determination step of determining, based on the histogram, a first bin threshold to separate a surface luminance of the protrusion of the mark from a surface luminance of the surface other than the protrusion, and a second bin threshold to separate a surface luminance of the recess of the mark from a surface luminance of the surface other than the recess; and an image display step of displaying the image of the surface of the tire including the mark on a screen by representing a region equal to or higher than the first bin threshold, a region lower than the first bin threshold and higher than the second bin threshold, and a region equal to or lower than the second bin threshold in the histogram in at least one of hue, saturation (chroma), and value (brightness).

### Brief Description of Drawings

Fig. 1 is an explanatory diagram showing a schematic configuration of an image processing device for displaying an image of a surface of a tire according to an embodiment of the present invention.
Fig. 2 is an explanatory view schematically showing a three-dimensional arrangement of laser sheet generating devices and a camera for use in displaying an image of a sidewall surface of the tire.
Fig. 3 is a flowchart explaining a procedure of a method for displaying an image of a surface (sidewall surface) of a tire according to the embodiment of the present invention.
Fig. 4 shows an exemplary taken image of the sidewall surface.
Fig. 5 is a waveform data graph showing a relation between a specific position on the sidewall surface in a circumferential direction thereof and a surface luminance at the specific position.
Fig. 6 shows a histogram representing a relation between bins for surface luminance and respective frequencies in the bins.
Fig. 7 is an explanatory view explaining a first bin threshold and a second bin threshold in the histogram.
Fig. 8 shows an exemplary image of the sidewall surface displayed on a screen of a display device without adopting the idea of the present invention
Fig. 9 shows an exemplary image of the sidewall surface displayed on the screen of the display device according to the embodiment of the present invention.
Fig. 10 shows an explanatory view explaining a principle of the embodiment of the present invention.

### Description of Embodiments

The present inventor has diligently studied a technology of clearly displaying, on a screen, an image of a surface of a tire formed with a mark having a protrusion and a recess to increase a visibility of the image. As a result, the present inventor has found that the object would be achievable by a configuration that will be described below.

Hereinafter, an embodiment of the present invention will be described with reference to the accompanying drawings for understanding of the present invention. It should be noted that the following embodiment illustrates one example of the invention, and does not delimit the protection scope of the present invention.

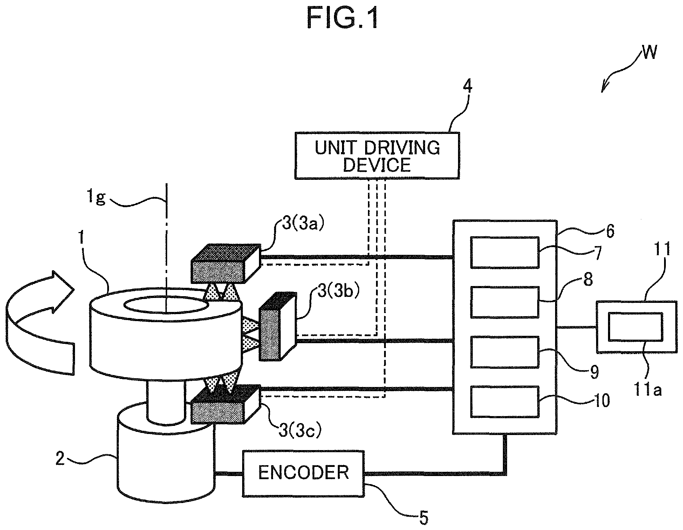

Fig. 1 is an explanatory diagram showing a schematic configuration of an image processing device for displaying an image of a surface of a tire according to an embodiment of the present invention.

In Fig. 1, a tire shape inspection system W mainly includes a tire rotator 2, sensor units 3, a unit driving device 4, an encoder 5, an image processing device 6, a display device 11 serving as an image display device, and a screen 11a included in the display device 11. The image processing device 6 includes a waveform data acquisition part 7, a histogram creation part 8, a bin threshold determination part 9, and an image display part 10. The image processing device 6 is further connectable to the tire rotator 2, the sensor units 3, the unit driving device 4, and the encoder 5. Besides, the image processing device 6 is configured by, for example, a digital signal processor (DSP). The DSP can incorporate the waveform data acquisition part 7, the histogram creation part 8, the bin threshold determination part 9, and the image display part 10.

The tire rotator 2 is a rotating device such as a motor for rotating a tire 1 about a rotational axis 1g thereof. For instance, the tire rotator 2 rotates the tire 1 at a rotational speed of 60 rpm. Under the rotation, the sensor units 3 take images of a whole circumferential surface range of the tire 1 including a tread surface and sidewall surfaces during one rotation of the tire 1 per second.

In Fig. 1, the sensor units 3 include three sensor units 3, i.e., two sensor units 3a, 3c for respectively taking images of two sidewall surfaces of the tire 1, and one sensor unit 3b for taking an image of the tread surface of the tire 1.

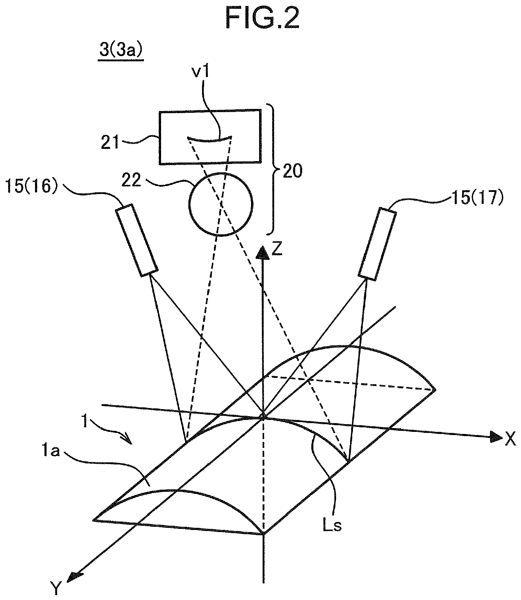

Fig. 2 is an explanatory view schematically showing a three-dimensional arrangement of laser sheet generating devices 15 and a camera 20 constituting a representative sensor unit 3 (3a) among the sensor units 3 shown in Fig. 1. In Fig. 2, the sensor unit 3 (3a) includes the laser sheet generating devices 15 (16), 15 (17) for outputting light sheets respectively, i.e., two light sheets in total, and the camera 20. Hereinafter, the laser sheet generating devices 15 are independently referred to as the laser sheet generating device 15 (16) and the laser sheet generating device 15 (17), if necessary. Further, Fig. 2 shows coordinate axes of an X-axis representing a radial direction of the tire 1, i.e., a radial direction of the sidewall surface 1a, a Y-axis representing a circumferential direction of the tire, i.e., a rotational direction of the tire 1, and a Z-axis representing a direction perpendicular to the X-axis and the Y-axis, i.e., a direction in which the rotational axis 1g of the tire 1 extends. Moreover, the Y-axis in each of the sensor units 3a, 3b, 3c represents the circumferential direction of the tire 1.

As shown in Fig. 2, a light beam in a sheet shape (hereinafter, referred to as "a light sheet") emitted from the laser sheet generating device 15 (16) and a light sheet emitted from the laser sheet generating device 15 (17) form a single light line by aligning along a line Ls on the sidewall surface 1a in the radial direction thereof with adjacent ends of the light sheets overlapping each other in the X-axis direction. The single light line extends in the direction (the X-axis direction) orthogonal to the circumferential direction (the Y-axis direction) of the sidewall surface 1a of the tire 1.

The camera 20 has a camera lens 22 and an image taking element 21 (a light receiving part), and takes a line image vl (an image on the line Ls) defined by the two light sheets aligning and irradiated on the surface (the sidewall surface 1a in Fig. 2) of the rotating tire 1. The image taken in this manner may be called a light-sectioned image.

Regarding Fig. 2, the three-dimensional arrangement of the sensor unit 3a including the laser sheet generating devices 15 and the camera 20 for taking an image of the sidewall surface 1a has been described heretofore. The remaining sensor units 3b, 3c also have the same basic principle of the three-dimensional arrangement of the laser sheet generating devices 15 and the camera 20 as the sensor unit 3a.

The unit driving device 4 (see Fig. 1) serves as a drive source employing a driving device, e.g., a servomotor, for supporting the three sensor units 3 movably and deciding positions of the sensor units 3 in relation to the tire 1. In response to an operation to a predetermined operative part or to a control instruction from an external device, the unit driving device 4 sets each of the sensor units 3 at a predetermined standby position away from the tire 1 before the tire 1 is detached from the tire rotator 2 and a subsequent tire 1 is attached thereto, and after the attachment of the subsequent tire 1 to the tire rotator 2, the unit driving device 4 sets each of the sensor units 3 at a predetermined inspection position closer to the subsequent tire 1.

The encoder 5 is a sensor for detecting a rotational angle of the rotational axis of the tire rotator 2, i.e., a rotational angle of the tire 1. A signal detected therefrom is used to control a time of taking the image by the camera 20 included in the sensor unit 3.

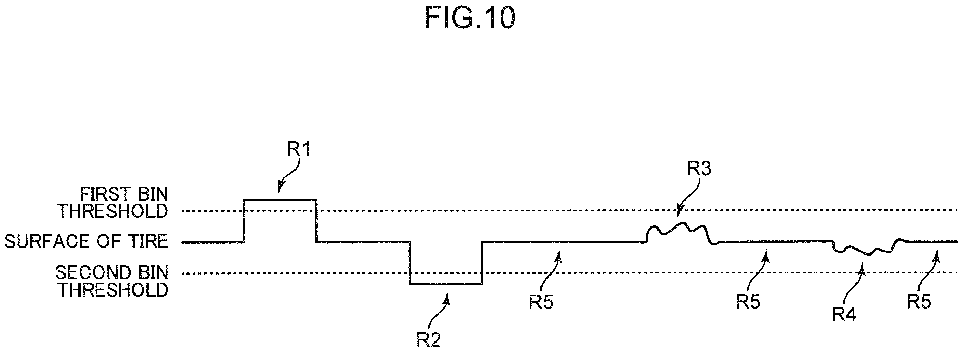

Fig. 10 is an explanatory view explaining a principle of the embodiment of the present invention. The surface (e.g., the sidewall surface 1a) of the tire 1 is formed with a mark having a protrusion and a recess. Besides, a defective protrusion and/or recess may occur on the surface of the tire 1. A region R1 represents the protrusion of the mark, and a region R2 represents the recess of the mark. A region R3 represents a defective protrusion having an uneven surface and extending outward from the surface of the tire 1, and a region R4 represents a defective recess having an uneven surface and extending inward from the surface of the tire 1. A region R5 represents the remaining region of the surface of the tire 1 having no defects other than the regions R1 to R4.

The present inventor has found a case of a greater height of the region R1 than that of the region R3 and another case of a greater depth of the region R2 than that of the region R4 with reference to the region R5. In the former case, a luminance of the region R1 (a surface luminance of the protrusion of the mark) is larger than a surface luminance of the regions R2 to R5 (a surface luminance of the surface of the tire 1 other than the protrusion of the mark). A first bin threshold is used to separate the luminance of the region R1 from that of the regions R2 to R5. In the latter case, a luminance of the region R2 (a surface luminance of the recess of the mark) is smaller than a luminance of the regions R1, R3 to R5 (a surface luminance of the surface of the tire 1 other than the recess of the mark). A second bin threshold is used to separate the luminance of the region R2 from that of the regions R1, R3 to R5.

The embodiment of the present invention has a main feature in displaying a light-sectioned image of the surface of the tire 1 taken by each of the sensor units 3 while the tire 1 rotates relative to the sensor units 3 (i.e., while the tire 1 rotates and the sensor unit 3 revolves around the tire 1) by visually separating a region (the region R1) equal to or higher than the first bin threshold, a region (each of the region R3, the region 4, and the region R5) lower than the first bin threshold and higher than the second bin threshold, and a region (the region R2) equal to or lower than the second bin threshold in the light-sectioned image. This configuration achieves an increase in the visibility of each of the mark having the protrusion and the recess on the surface of the tire 1, and the defective protrusion and/or recess having occurred on the surface of the tire 1.

Hereinafter, an exemplary light-sectioned image of the surface of the tire 1 expressed in a grayscale of 256 tones will be described. According to the embodiment of the present invention, the region (region R1) equal to or higher than the first bin threshold is represented in the tone of 255 (in white), the region (region R2) equal to or lower than the second bin threshold is represented in the tone of 0 (in black), and each of the regions (the region, R3, the region R4, and the region R5) lower than the first bin threshold and higher than the second bin threshold are represented in the tones of 254 to 1.

Representation of the region R1 in the white and the region R2 in the black leads to a clear display of the mark having the protrusion and the recess. Consequently, it is possible to increase the visibility of the mark.

Such representation of the region R1 in the tone of 255 (in the white) and the region R2 in the tone of 0 (in the black) succeeds in the large number of components of the grayscale, i.e., 254, for use in the displaying of the regions R3 and R4. Accordingly, a resolution to each of these regions can be increased. This results in improving the visibility of the defective protrusion and/or recess having occurred on the surface of the tire 1.

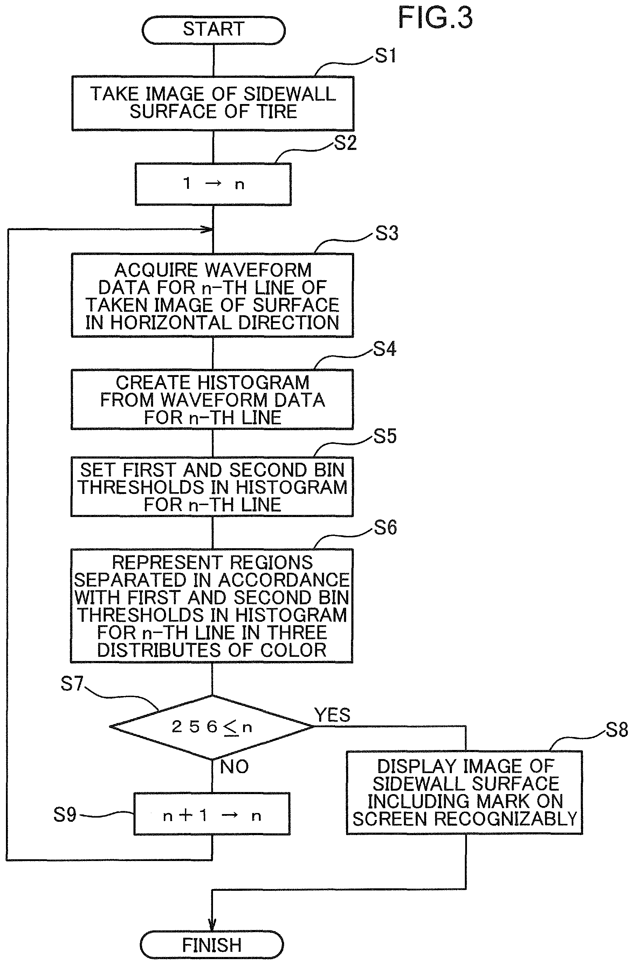

Next, a procedure of a method for displaying an image of a surface of a tire to be executed to the sidewall surface 1a shown in the example in Fig. 2 by the image processing device 6 according to the embodiment shown in Fig. 1 will be described with reference to a flowchart shown in Fig. 3.

### Step S1

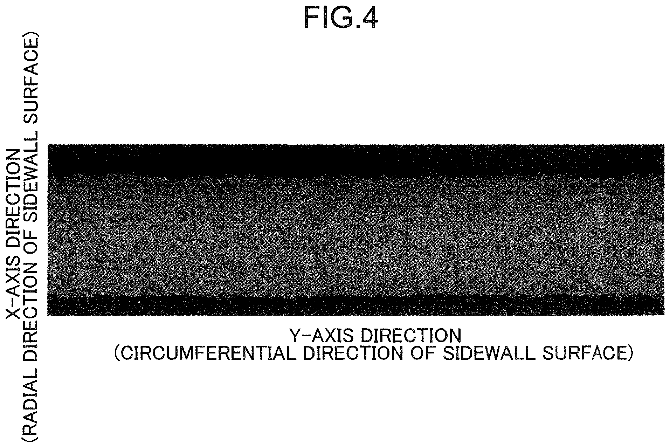

A shutter control (a control of a time for taking an image) of a camera 20 included in a sensor unit 3 (3a) is executed in response to a detection signal from an encoder 5. For example, the shutter of the camera 20 is controlled to be released at every time when the encoder 5 detects a rotation of a tire 1 rotating at the rotational speed of 60 rpm at an angle of 0.09° (= 360°/4000). Under the control, an image of the sidewall surface 1a is taken at an image taking rate of 4000 frames per second (an image taking step). The image is taken (as a light-sectioned image) by a light sectioning way. Fig. 4 shows an exemplary taken image of the sidewall surface. A horizontal axis represents the Y-axis direction (a circumferential direction of a sidewall surface 1a of the tire 1, i.e., a rotational direction of the tire 1), and a vertical axis represents the X-axis direction (a radial direction of the sidewall surface 1a of the tire 1). However, what the image of the sidewall surface 1a in Fig. 4 shows is unrecognizable.

### Step S2

The waveform data acquisition part 7 sets the number of lines n extending in a horizontal direction and constituting the taken image of the sidewall surface 1a to 256. The image of the surface is processed line by line in the horizontal direction. This processing will be described below. Here, the numeral" 1" is input to n as an initial value.

### Step 3

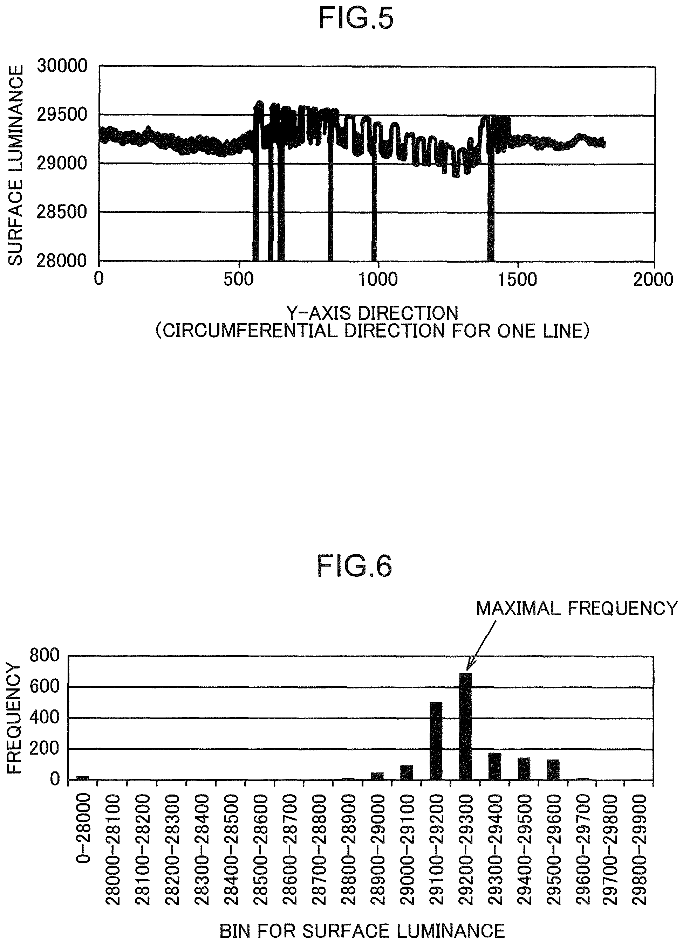

The waveform data acquisition part 7 included in the image processing device 6 acquires waveform data representing a relation between a specific position on the sidewall surface 1a of the tire 1 in the circumferential direction (the Y-axis direction) thereof and a surface luminance at the specific position from a n = 1-th line of the taken image of the sidewall surface 1a in the horizontal direction thereof (a waveform data acquisition step, see Fig. 5). In Fig. 5, a horizontal axis denotes the Y-axis direction (the circumferential direction of the sidewall surface 1a), and a vertical axis represents a magnitude relation of the surface luminance relative to the position.

### Step S4

The histogram creation part 8 included in the image processing device 6 creates, from acquired waveform data for the n = 1-th line, a histogram representing a relation between bins for surface luminance each set at a predetermined interval (e.g., here 100 × 0.01 µm) and respective frequencies in the bins (a histogram creation step, see Fig. 6). In Fig. 6, a horizontal axis represents each bin for surface luminance, and a vertical axis represents each frequency. Moreover, the predetermined interval is appropriately variable. As a result, the image of the surface is more clearly displayable on a screen 11a in accordance with a type of the tire 1.

### Step S5

The bin threshold determination part 9 included in the image processing device 6 determines, based on the histogram for the n =1-th line, a first bin threshold for a bin (from 29200 to 29300 in Fig. 6) having a maximal frequency to a bin (e.g., 29500 to 29600) which is larger by a predetermined value, and a second bin threshold for the bin having the maximal frequency to a bin (e.g., 28900 to 29000) which is smaller by the predetermined value (a bin threshold determination step, see Fig. 6). Alternatively, the bin threshold determination part 9 may calculate a standard deviation σ, and determine the first bin threshold based on the maximal frequency +3 and the second bin threshold based on the maximal frequency -3σ with reference to the bin having the maximal frequency. Additionally, an operator may adjust the first and the second bin thresholds at every time. The image of the surface is thus more clearly displayable on the screen 11a in accordance with a type of the tire 1 in the same manner as in step S4.

### Step S6

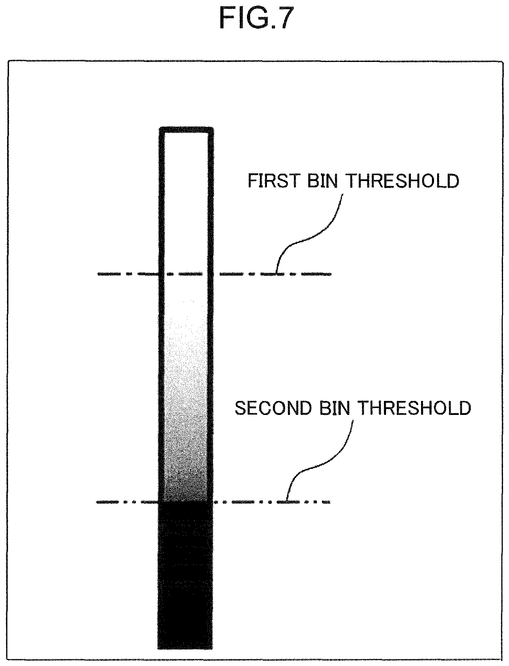

The image display part 10 included in the image processing device 6 represents a region (e.g., a characteristic region) equal to or higher than the first bin threshold, a region lower than the first bin threshold and higher than the second bin threshold, and a region equal to or lower than the second bin threshold in the histogram for the n = 1-th line in at least one of three attributes of color, i.e., hue, saturation(chroma), and value (brightness) (an image display step, see Fig. 7). As shown in Fig. 7, the image display step includes representing the region equal to or higher than the first bin threshold in white, the region equal to or lower than the second bin threshold in black, and the region lower than the first bin threshold and higher than the second bin threshold in a value gradation from the white to the black in the value among the three attributes of color, i.e., hue, saturation, and value.

Specifically, a region of the image to be displayed is presumed to include a mark having a protrusion and a recess on the surface and solely showing a prominent difference in the protrusion and the recess (i.e., a difference in the Z-axis direction). In this case, use of all the tones in the value gradation from the white to the black shown in Fig. 7 would result in using many of the tones for the mark. This is because the way of using all the tones is significantly influenced by the mark, and thus the number of tones available for the region other than the mark is limitedly small.

In this case, for example, step S6 is applied to a mark having a large protrusion prominently extending outward in a plus direction of the Z-axis, and a predetermined value in the Z-axis direction is defined as the first bin threshold. Any region of the mark higher than the first bin threshold and protruding in the direction of the protrusion is uniformly represented in the white. In this way, the mark is clearly displayable. In contrast, for a large recess prominently extending downward in a minus direction of the Z-axis, a predetermined value in the Z-axis direction is defined as the second bin threshold. Any region extending inward in the direction of the recess is uniformly represented in the black. In this way, the mark is clearly displayable.

As described above, the first bin threshold is a threshold for uniform representation in the white without displaying a region higher than the first bin threshold in the Z-direction. The second bin threshold is a threshold for uniform representation in the black without displaying a region lower than the second bin threshold in the Z-axis direction.

### Step S7

The image display part 10 determines whether the number of lines n in the horizontal direction is 256 (set number) set in step S2 or more.

### Step S8

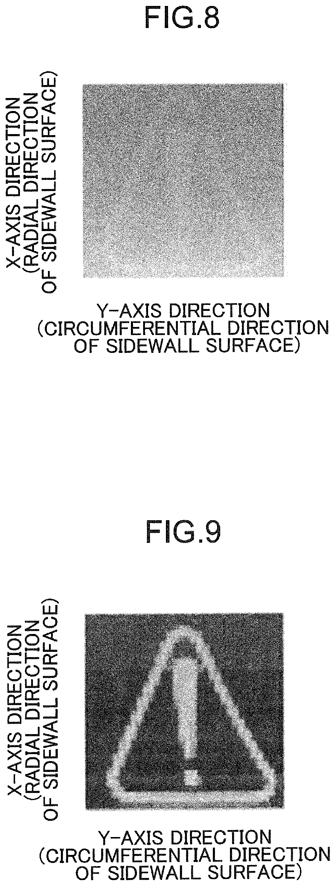

When determining that the number of lines n in the horizontal direction equals to or larger than the set number (see step S7), the image display part 10 displays the image of the sidewall surface 1a of the tire 1 including the mark on the screen 11a of the display device 11 (see Fig. 9). Here, Fig. 8 shows a part of the mark formed on the sidewall surface 1a displayed on the screen 11a without adopting the idea of the present invention. Specifically, the steps concerning the bin thresholds, i.e., the bin threshold determination step and the image display step using the bin thresholds, are excluded. In other words, Fig. 8 shows an image obtained by extracting a part of the mark (the protrusion of the mark formed on the sidewall surface 1a) from the image of the surface taken in step S1. Fig. 9 shows an exemplary image of the sidewall surface 1a in the same region according to the embodiment. In other words, Fig. 9 shows an image obtained by extracting a part of the mark (the protrusion of the mark formed on the sidewall surface 1a) from the image of the surface represented in step S6. In Fig. 9, the image of the sidewall surface 1a of the tire 1 formed with the mark having the protrusion and the recess is more clearly displayed on the screen 11a. As a result, the visibility is increased. Accordingly, a possible position where an obvious defect or malfunction of the tire 1 occurs is recognizable. Additionally, the image of the sidewall surface 1a is clearly displayed on the screen 11a. This consequently provides an advantageous operational effect that, for example, it is possible to easily determine a specific position on the sidewall surface 1a to be inspected.

### Step S9

Conversely, when determining that the number of lines n in the horizontal direction is smaller than the set number (see step S7), the image display part 10 adds 1 to n, and newly define the set number (n + 1) as n. Then, the flow returns to step S3, and the sequence of steps S3 to S9 is repeated until the number of lines n in the horizontal direction is determined as the set number or larger.

Described in the embodiment is the example where the number of lines n in the horizontal direction constituting the taken image of the sidewall surface 1a is set to 256 and the image of the surface is processed line by line. However, the processing way should not be limited thereto. For example, the entirety of the taken image of the sidewall surface 1a of the tire 1 may be redisplayable by subjecting the image sequentially to the waveform data acquisition step, the histogram creation step, the bin threshold determination step, and the image display step. However, adoption of the way of processing the taken image of the sidewall surface 1a line by line in the horizontal direction like the embodiment succeeds in displaying the image of the sidewall surface 1a more clearly on the screen 11a in consideration of a curve of the sidewall surface 1a of the tire 1, and hence is more preferable.

The number of lines n in the horizontal direction should not be limited to 256. For example, the number of lines n in the horizontal direction can be appropriately increased or decreased in accordance with, for example, the type of the tire 1 and a fineness of the image.

Described in the embodiment is the example where the value among the three attributes of color (hue, saturation, and value) is used in the image display step to represent the region equal to or higher than the first bin threshold in the white, the region equal to or lower than the second bin threshold in the black, and the region lower than the first bin threshold and higher than the second bin threshold in the value gradation from the white to the black in the histogram. However, the representation way should not be limited thereto. For instance, the region equal to or higher than the first bin threshold may be represented in a first hue, the region equal to or lower than the second bin threshold may be represented in a second hue, and the region lower than the first bin threshold and higher than the second bin threshold may be represented in a plurality of hues (including an intermediate hue between the first and the second hues here) different from the first and the second hues in accordance with a bin for surface luminance. Alternatively, the region equal to or higher than the first bin threshold, the region equal to or lower than the second bin threshold, and the region lower than the first bin threshold and higher than the second bin threshold may be represented in the saturation. Further alternatively, these regions may be represented in any combination of hue, saturation, and value. Specifically, in the image display step, the region equal to or higher than the first bin threshold, the region lower than the first bin threshold and higher than the second bin threshold, and the region equal to or lower than the second bin threshold in the histogram may be represented by changing two or more of the attributes of hue, saturation, and value.

Described in the embodiment is the example of the sidewall surface 1a of the tire 1. However, the surface should not be limited thereto. For example, the above-described idea of the present invention is applicable to a tread surface of the tire 1. In this case, the laser sheet generating device 15 (16) and the laser sheet generating device 15 (17) are configured to emit light sheets therefrom to form a single light line by aligning with the adjacent ends of the light sheets overlapping each other in a direction (the Z-axis direction) perpendicular to the circumferential direction (the Y-axis direction) of the tread surface of the tire 1.

Described in the embodiment is the example of the tire 1 which rotates about the rotational axis thereof. However, the configuration should not be limited thereto. For instance, the sensor units 3a, 3b, 3c may revolve around the rotational axis of the tire 1 which is fixed and stationary. In other words, the image taking step may be sufficient for taking an image of the surface of the tire in accordance with a relative rotation or revolution between the tire 1 and the sensor units 3a, 3b, 3c.

The embodiments of the present invention are described heretofore, but are merely described as examples without particularly limiting the present invention. It is the matter of design choice for changes in the details of the configuration. Furthermore, the operations and effects described in the embodiments of the present invention are merely listed as optimal operations and effects attained by the present invention, and thus should not be limited thereto.

### Summary of Embodiment

A method for displaying an image of a surface of a tire according to a first aspect includes: an image taking step of taking an image of a surface of a tire formed with a mark having a protrusion and a recess; a waveform data acquisition step of acquiring, from the taken image of the surface, waveform data representing a relation between a specific position on the surface of the tire and a surface luminance at the specific position; a histogram creation step of creating, from the waveform data, a histogram representing a relation between bins for surface luminance each set at a predetermined interval and respective frequencies in the bins; a bin threshold determination step of determining, based on the histogram, a first bin threshold to separate a surface luminance of the protrusion of the mark from a surface luminance of the surface other than the protrusion, and a second bin threshold to separate a surface luminance of the recess of the mark from a surface luminance of the surface other than the recess; and an image display step of displaying the image of the surface of the tire including the mark on a screen by representing a region equal to or higher than the first bin threshold, a region lower than the first bin threshold and higher than the second bin threshold, and a region equal to or lower than the second bin threshold in the histogram in at least one of hue, saturation, and value.

A method for displaying an image of a surface of a tire according to a second aspect is related to the method according to the first aspect. In this method, the waveform data is acquired from the taken image of the surface line by line in the waveform data acquisition step.

A method for displaying an image of a surface of a tire according to a third aspect is related to the method according to the first or the second aspect. In this method, in the image display step, the region equal to or higher than the first bin threshold is represented in white, the region equal to or lower than the second bin threshold is represented in black, and the region lower than the first bin threshold and higher than the second bin threshold is represented in a value gradation from the white to the black.

A method for displaying an image of a surface of a tire according to a fourth aspect is related to the method according to any one of the first to the third aspects. In this method, the predetermined interval is variable.

A method for displaying an image of a surface of a tire according to a fifth aspect is related to the method according to any one of the first to the fourth aspects. In this method, at least one of the first bin threshold and the second bin threshold is determined with reference to a bin having a maximal frequency.

A method for displaying an image of a surface of a tire according to a sixth aspect is related to the method according to any one of the first to the fifth aspects. In this method, the surface of the tire has a sidewall surface.

An image processing device according to a seventh aspect is an image processing device for displaying an image of a surface of a tire. The image processing device includes: a waveform data acquisition part which acquires, from an image of a surface of a tire taken by an image taking part, waveform data representing a relation between a specific position on the surface of the tire and a surface luminance at the specific position, the surface being formed with a mark having a protrusion and a recess; a histogram creation part which creates, from the waveform data, a histogram representing a relation between bins for surface luminance each set at a predetermined interval and respective frequencies in the bins; a bin threshold determination part which determines, based on the histogram, a first bin threshold to separate a surface luminance of the protrusion of the mark from a surface luminance of the surface other than the protrusion, and a second bin threshold to separate a surface luminance of the recess of the mark from a surface luminance of the surface other than the recess; and an image display part which displays the image of the surface of the tire including the mark on a screen by representing a region equal to or higher than the first bin threshold, a region lower than the first bin threshold and higher than the second bin threshold, and a region equal to or lower than the second bin threshold in the histogram in at least one of hue, saturation, and value.

An image processing device according to an eighth aspect is related to the image processing device according to the seventh aspect. In this image processing device, the waveform data acquisition part acquires the waveform data from the taken image line by line.

An image processing device according to a ninth aspect is related the image processing device according to the seventh or the eighth aspect. In this image processing device, the image display part represents the region equal to or higher than the first bin threshold in white, the region equal to or lower than the second bin threshold in black, and the region lower than the first bin threshold and higher than the second bin threshold in a value gradation from the white to the black.

An image processing device according to a tenth aspect is related to the image processing device according to any one of the seventh to the ninth aspects. In the device, the predetermined interval is variable.

An image processing device according to an eleventh aspect is related to the image processing device according to any one of the seventh to the tenth aspects. In this image processing device, at least one of the first bin threshold and the second bin threshold is determined with reference to a bin having a maximal frequency.

An image processing device according to a twelfth aspect is related to the image processing device according to any one of the seventh to the eleventh aspect. In this image processing device, the surface of the tire has a sidewall surface.

This application is based on Japanese Patent Application No. 2018-224546 filed in Japan Patent Office on November 30, 2018, the entire disclosure of which are hereby incorporated by reference.

Although the present invention has been fully described by way of example with reference to the accompanying drawings, it is to be understood that various changes and/or modifications will be apparent to those skilled in the art. Therefore, unless otherwise such changes or modifications depart from the scope of the present invention hereinafter defined, they should be construed as being included therein.

### Industrial Applicability

The present invention can provide a method for displaying an image of a surface of a tire and an image processing device for display the image.

## Claims

1. A method for displaying an image of a surface of a tire, comprising:
an image taking step of taking an image of a surface of a tire formed with a mark having a protrusion and a recess;
a waveform data acquisition step of acquiring, from the taken image of the surface, waveform data representing a relation between a specific position on the surface of the tire and a surface luminance at the specific position of the surface;
a histogram creation step of creating, from the waveform data, a histogram representing a relation between bins for surface luminance each set at a predetermined interval and respective frequencies in the bins;
a bin threshold determination step of determining, based on the histogram, a first bin threshold to separate a surface luminance of the protrusion of the mark from a surface luminance of the surface other than the protrusion, and a second bin threshold to separate a surface luminance of the recess of the mark from a surface luminance of the surface other than the recess; and
an image display step of displaying the image of the surface of the tire including the mark on a screen by representing a region equal to or higher than the first bin threshold, a region lower than the first bin threshold and higher than the second bin threshold, and a region equal to or lower than the second bin threshold in the histogram in at least one of hue, saturation, and value.

2. The method according to claim 1, wherein the waveform data is acquired from the taken image of the surface line by line in the waveform data acquisition step.

3. The method according to claim 1, wherein, in the image display step, the region equal to or higher than the first bin threshold is represented in white, the region equal to or lower than the second bin threshold is represented in black, and the region lower than the first bin threshold and higher than the second bin threshold is represented in a value gradation from the white to the black.

4. The method according to claim 1, wherein the predetermined interval is variable.

5. The method according to claim 1, wherein at least one of the first bin threshold and the second bin threshold is determined with reference to a bin having a maximal frequency.

6. The method according to any one of claims 1 to 5, wherein the surface of the tire has a sidewall surface.

7. An image processing device for displaying an image of a surface of a tire, comprising:
a waveform data acquisition part which acquires, from an image of a surface of a tire taken by an image taking part, waveform data representing a relation between a specific position on the surface of the tire and a surface luminance at the specific position, the surface being formed with a mark having a protrusion and a recess;
a histogram creation part which creates, from the waveform data, a histogram representing a relation between bins for surface luminance each set at a predetermined interval and respective frequencies in the bins;
a bin threshold determination part which determines, based on the histogram, a first bin threshold to separate a surface luminance of the protrusion of the mark from a surface luminance of the surface other than the protrusion, and a second bin threshold to separate a surface luminance of the recess of the mark from a surface luminance of the surface other than the recess; and
an image display part which displays the image of the surface of the tire including the mark on a screen by representing a region equal to or higher than the first bin threshold, a region lower than the first bin threshold and higher than the second bin threshold, and a region equal to or lower than the second bin threshold in the histogram in at least one of hue, saturation, and value.

8. The image processing device according to claim 7, wherein the waveform data acquisition part acquires the waveform data from the taken image line by line.

9. The image processing device according to claim 7, wherein the image display part represents the region equal to or higher than the first bin threshold in white, the region equal to or lower than the second bin threshold in black, and the region lower than the first bin threshold and higher than the second bin threshold in a value gradation from the white to the black.

10. The image processing device according to claim 7, wherein the predetermined interval is variable.

11. The image processing device according to claim 7, wherein at least one of the first bin threshold and the second bin threshold is determined with reference to a bin having a maximal frequency.

12. The image processing device according to any one of claims 7 to 11, wherein the surface of the tire has a sidewall surface.
